# EUROPEAN PATENT SPECIFICATION

(11) **EP 2 892 037 B1**
(45) Date of publication and mention of the grant of the patent: **03.05.2017**
(21) Application number: 14305003.7
(22) Date of filing: 03.01.2014
(51) Int. Cl.: G08B 23/00, G01H 3/14, G10K 11/16

(54) **Server providing a quieter open space work environment**
Server zur Bereitstellung einer ruhigeren Arbeitsumgebung im offenen Raum
Serveur fournissant un environnement de travail plus silencieux d'espace ouvert

(43) Date of publication of application: 08.07.2015
(73) Proprietor: ALCATEL LUCENT, 92100 Boulogne-Billancourt (FR)
(72) Inventor: Jehanno, Loic, 29806 Brest (FR); Kerfourn, Regis, 29806 Brest (FR); Chaptal, Pierre, 29806 Brest (FR)
(74) Representative: Berthier, Karine

(56) References cited:
- EP-A1- 2 439 708
- CN-U- 202 916 959
- US-A1- 2002 145 521
- US-A1- 2008 159 547

## Description

### BACKGROUND OF THE INVENTION

### Field of the invention

The present invention generally relates to a server providing a quieter open space work environment. Office work places are more and more often open work spaces. An open work space eases verbal communication between people in the same open space. However conversations between people, conversations on phones (sometime hand free), and ringtones of phones, make a noisy environment, which generates tiredness and frustration of people working in such an open work space.
The impact of a noisy work place is huge on working people. It is a source of negative stress, lack of concentration, and tension between people. It generates a loss of productivity for a company.

### Description of the prior art

Rules are generally issued in most companies, in order to generate the lowest noise level as possible in the open work spaces. In particular, these rules compel anybody to go to dedicated rooms to hold meetings and conference calls. Phone calls and conversations are allowed in the open work spaces for short periods of time only. If a conversation is longer than expected, the use of a dedicated room is then mandatory.
However rules are not thoroughly followed. While some people have low voice and do not generate a high noise level in an open work space, others have loud voices and generate frustration for people around them.

Many applications regarding noise reduction or noise metering exist on personal computers or smart phones; but they are only related to the noise generated on the work place where the device is. They are not quite satisfactory because the full environment of the work place is not taken into account. In some cases, you may be noisy but you add low additional perturbation if the whole environment is also noisy. Then noise reduction or noise metering on your own computer or smartphone is useless.
The document US 2002/145521 describes a sound monitoring system for notifying at least one individual responsible for the sound.

The document CN 202 916 959 describes a community noise electronic warning indicator that transmits warning information to a remote server via a network interface in order to notify a management worker to maintain a quiet and harmonious community environment.

The document EP 2 439 708 describes a system for monitoring a distressed sound. It comprises a noise detection module configured to monitor ambient noise through a microphone on a digital telephony device operating in an idle state, and determine an ambient noise level. A sound processing module is configured to process sounds received from the microphone, which have amplitudes greater than the amplitude of the ambient noise, and determine if the processed sounds match a predetermined statistical model of a distressed sound. An assistance request module is configured to send a request for assistance via the digital telephony device for processed sounds that match the predetermined statistical model of the distressed sound.

Some physical means are known for reducing the effect of ambient noise:
- Active noise reduction by loudspeakers or headsets.
- Passive noise reduction by sound absorbing building materials. Automatic adaptation of the audio levels of phone sets: Each phone set comprise an auxiliary microphone for capturing the ambient noise. According to the ambient noise, the phone set decides by itself to adapt the level of the reproduced audio signal.

These physical means are not quite satisfactory. So there is a need to provide a better technical solution for obtaining a quieter open space work environment.

### SUMMARY OF THE INVENTION

The object of the invention is a server for providing a quieter environment in an open work space comprising a plurality of work places WP₁₁, ..., WPᵢⱼ, ... WPₙₘ respectively used by a plurality of users; said server comprising a processor configured for:
- receiving, at the instant t, digital audio signals ANᵢⱼ(t), for i = 1 to n and j = 1 to m, corresponding to the ambient noises respectively captured by microphones at the work places WP₁₁, ..., WPₙₘ;
- computing average values Lᵢⱼ(t), for i = 1 to n and j = 1 to m, respectively representing the current noises at the work places WP₁₁, ..., WPₙₘ, at the instant t;
- computing a threshold value THᵢⱼ(t) that represents the current noise, at the instant t, in the neighbourhood of the work place WPᵢⱼ;
- comparing each digital audio signal ANᵢⱼ(t) with the threshold value THᵢⱼ(t) for i = 1 to n and j = 1 to m;
- then determining what are the digital audio signals ANᵢⱼ(t) that are respectively greater than the threshold value THᵢⱼ(t) for i = 1 to n and j = 1 to m, for determining at least one work place that corresponds to a digital audio signal ANᵢⱼ(t) that is greater than the threshold value THᵢⱼ(t); and then notifying a warning to the user of the so determined work place;
characterized in that said threshold is computed as a function of p values Lᵢⱼ(t) respectively representing the current noises at p work places that are neighbors of the work place WPᵢⱼ.
Thanks to the comparison between the noise generated locally on each work place with a threshold representing the average noise of all the work space (or the average noise of a limited neighbourhood around the work place), it is possible to determine whether the user of this work place is particularly noisy, in comparison with his/her neighbourhood, and then to notify a warning to this user. This warning encourages the user to be quieter.

According to a first peculiar embodiment of the server according to the present invention, periodically computing a threshold value THᵢⱼ(t) that represents the current noise in the neighbourhood of the work place WPᵢⱼ as a function of the values Lᵢⱼ(t) respectively representing the current noises at the work places WP₁₁, ..., WPₙₘ, at the instant t, comprises the step of taking into account the values Lᵢⱼ(t) respectively representing the current noises at all the work places WP₁₁, ..., WPₙₘ of the open work space (OWS).

According to a second peculiar embodiment of the server according to the present invention, periodically computing a threshold value THᵢⱼ(t) that represents the current noise in the neighbourhood of the work place WPᵢⱼ as a function of the values Lᵢⱼ(t) respectively representing the current noises at the work places WP₁₁, ..., WPₙₘ, at the instant t, takes into account the values Lᵢⱼ(t) respectively representing the current noises at work places that are close neighbours of the workplace WPᵢⱼ.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 is a block diagram showing an exemplary open work space comprising an embodiment of the server according to the invention.
- Figure 2 shows a specimen of a known telephone set that can be used to collaborate with the server according to the invention.
- Figure 3 is a flow chart of the steps executed by a first embodiment of the server according to the invention.
- Figure 4 is a flow chart of the steps executed by a second embodiment of the server according to the invention.
- Figure 5 illustrates the technical effect of the invention in the exemplary open work space represented on figure 1.

### DETAILED DESCRIPTION OF THE PREFERRED EMBODIMENTS

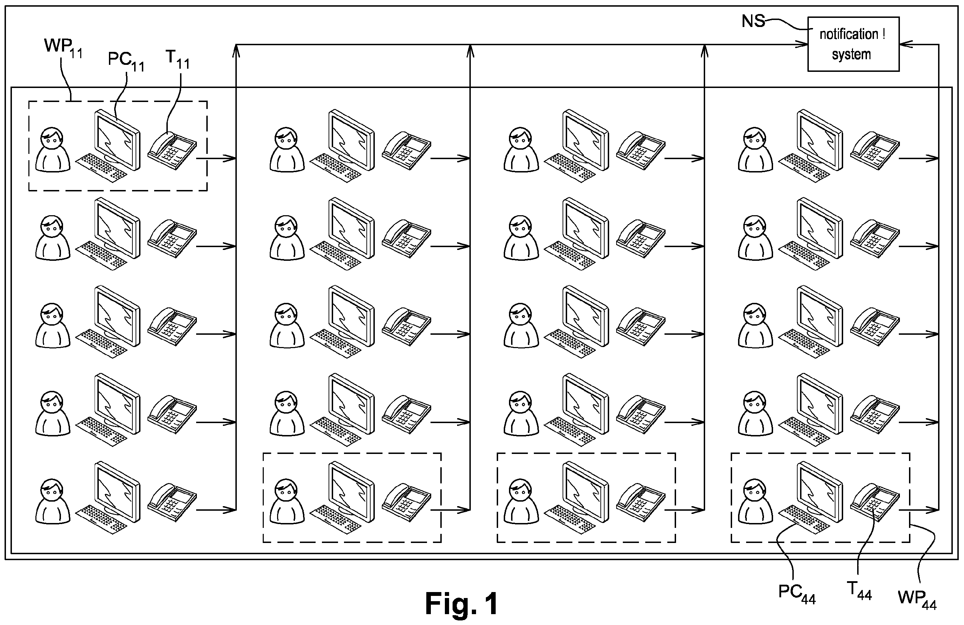

On **figure 1**, an exemplary open work space OWS comprises a plurality of work places WP₁₁, ..., WPᵢⱼ, ..., WPₙₘ respectively used by a plurality of users. They are placed in a matrix of m columns and n lines. For instance, n = 4 and m = 4. For instance, it is an open work space for sixteen employees of a call center. Each work place WSᵢⱼ comprises a personal computer PCᵢⱼ and a telephone set Tᵢⱼ. These telephone sets Tᵢⱼ are linked to a classical call server (not represented) and to a notification server NS according to the invention, via a classical Ethernet local area network.

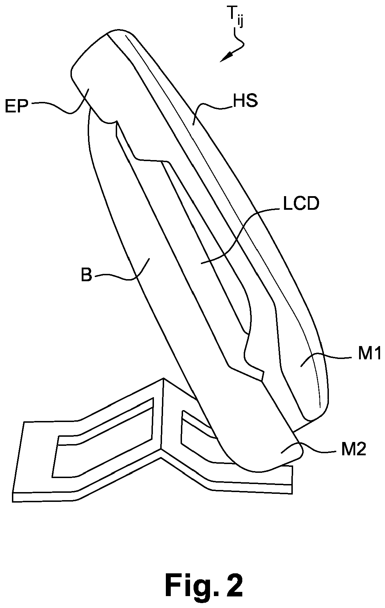

**Figure 2** shows a specimen Tᵢⱼ of a known telephone set that can be used to collaborate with the server according to the invention. It comprises a classical handset HS comprising a earphone EP, a microphone M1, and a base B comprising a liquid crystal display LCD and an auxiliary microphone M2. According to the invention, the auxiliary microphone M2 is used to permanently capture the ambient noise around the telephone set Tᵢⱼ. An application is embedded in this telephone set in order to permanently transmit, to the notification server NS, a digital audio signal ANᵢⱼ(t) corresponding to the ambient noise captured by this auxiliary microphone M2.
In addition, the digital audio signal ANᵢⱼ(t) may be used locally in the telephone set Tᵢⱼ, or centrally in a call server, for classically reducing the effect of the ambient noise by subtracting the digital audio signal ANᵢⱼ(t) from the audio signal applied to the loud speaker HP, during a phone call.

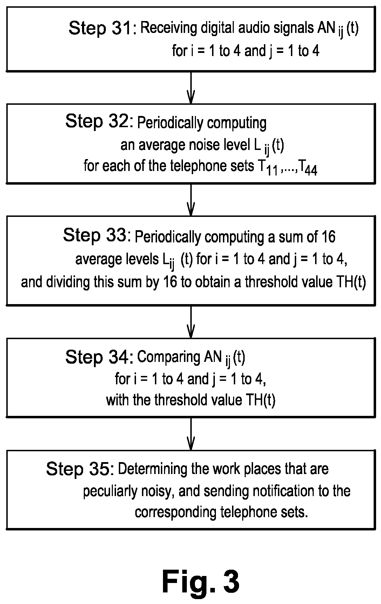

**Figure 3** is a flow chart of the steps executed by a first embodiment NS of the server according to the invention. The notification server NS comprises a processor executing a software module that is configured for doing the following steps:
**Step 31:** This software module receives the sixteen digital audio signals ANᵢⱼ (t) for i = 1 to 4 and j= 1 to 4, corresponding to the ambient noises captured by the auxiliary microphones of the telephone sets T₁₁, ..., T₄₄ of all the work places of the open work space OWS, at the instant t.
**Step 32:** It periodically computes an average level Lᵢⱼ(t) for each telephone set Tᵢⱼ for i = 1 to 4 and j= 1 to 4, in a sliding time interval staring at time t, during one minute for instance.
**Step 33:** The software module also periodically computes a sum S(t) of the sixteen average levels Lᵢⱼ(t), for i = 1 to 4 and j= 1 to 4. Then it divides this sum S(t) by sixteen to obtain a threshold value TH(t) that represents the average level of the ambient noise in the whole open work space OWS at the instant t.
**Step 34:** Then it compares each digital audio signal ANᵢⱼ(t), for i = 1 to 4 and j= 1 to 4, with the threshold value TH(t) and determines what are the digital audio signals ANᵢⱼ(t) that are greater than the threshold value TH(t).
**Step 35:** The result of this comparison determines the work places that are peculiarly noisy, presumably because the users working at these places are speaking too loud. Then the software module sends a notification to the telephone sets Tᵢⱼ (or to the associated personal computers PCᵢⱼ) corresponding to the digital audio signals ANᵢⱼ(t) that are greater than the threshold value TH(t).

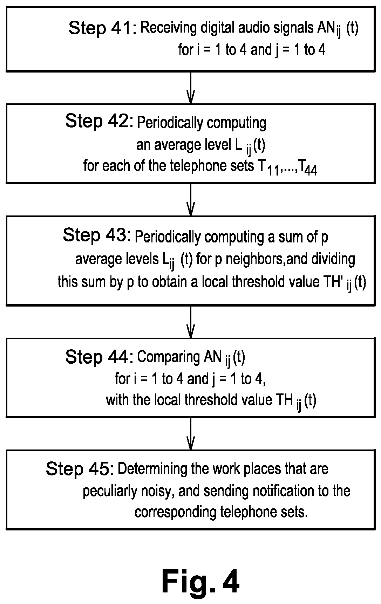

**Figure 4** is a flow chart of the steps executed by a second embodiment NS' of the server according to the invention. The notification server NS' comprises a processor executing a software module that is configured for doing the following steps:
**Step 41:** This software module receives the sixteen digital audio signals AN_{ij (t)}, for i = 1 to 4 and j= 1 to 4, corresponding to the ambient noises captured by the auxiliary microphones of the telephone sets T₁₁, ..., T₄₄ of all the work places of the open work space OWS.
**Step 42:** It periodically computes an average level Lᵢⱼ(t) for each telephone set Tᵢⱼ for i = 1 to 4 and j= 1 to 4, in a sliding time interval staring at time t, during one minute for instance.
**Step 43:** Then, for each work place WPᵢⱼ, for i = 1 to 4 and j= 1 to 4, it computes a sum S'ᵢⱼ(t) of the p average levels Lij(t) corresponding to p close neighbor work places around the considered work place WPᵢⱼ:

| | | |
|---|---|---|
| WP_{i-1 j-1}, | WP_{i-1 j}, | WP_{i-1 j+1}, |
| WP_{i j-1} | | WP_{i j+1}, |
| WP_{i+1 j-1}, | WP_{i+1 j}, | WP_{i+1 j+1} |

It then divides this sum S'ᵢⱼ(t) by p. For instance, p = 8 for WP₂₂, whereas p = 3 for WP₁₁ because it is on a border. So the software module obtains a local threshold values TH'ᵢⱼ(t) that represents the average level of the ambient noise at a given time t, in the closest neighborhood of the work place WPᵢⱼ. In this exampleof open work space OWS, there are sixteen local threshold values TH'ᵢⱼ(t) for the instant t. **Step 44:** The software module compares each digital audio signal ANᵢⱼ(t), for i = 1 to 4 and j = 1 to 4, with the respective local threshold values TH'ᵢⱼ(t), and determines what are the digital audio signals ANᵢⱼ(t) that are greater than the corresponding threshold value TH'ᵢⱼ(t).
**Step 45:** The comparison determines the work places that are peculiarly noisy, presumably because the users working at these places are speaking too loud. Then the software sends a notification to the telephone sets Tᵢⱼ (or to the associated personal computers PCᵢⱼ) corresponding to the digital audio signals ANᵢⱼ(t) that are greater than the current threshold value TH'ᵢⱼ(t).

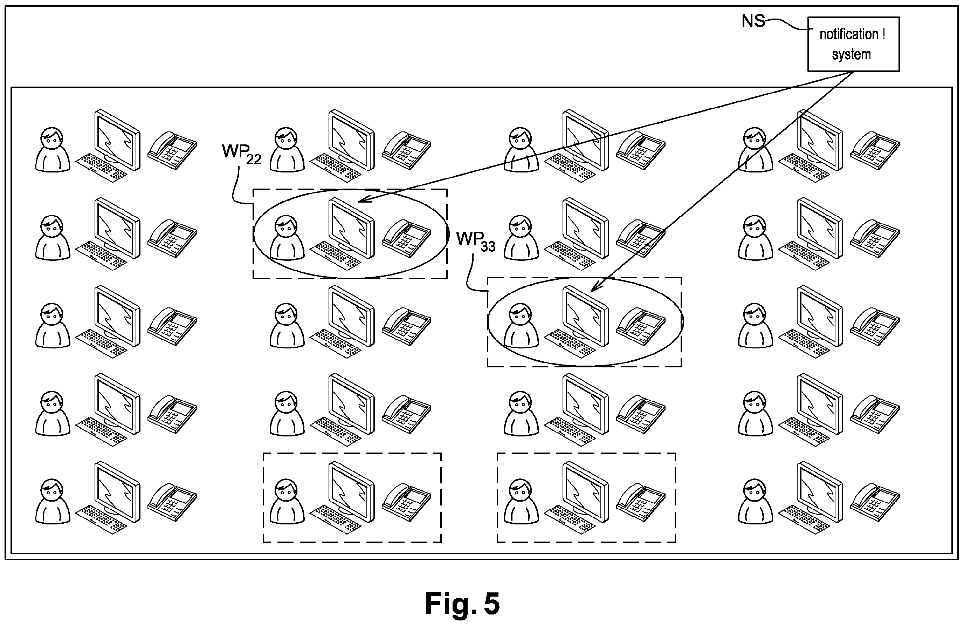

**Figure 5** illustrates the technical effect of the invention in the exemplary open work space OWS represented on figure 1. In the example represented on figure 5, at the instant t, the digital audio signals AN₂₂ (t) and AN₃₃(t) are greater than the current threshold value TH(t). A warning is notified to the users of the work places WP₂₂ and WP₃₃. In this example, the notification server NS sends notifications respectively to the telephone terminals T₂₂ and T₃₃. In an embodiment, the warning is a blinking message on the displays LCD of these telephone sets, for instance, or on the screens of the associated personal computers. When people know they are generating perturbations for other people in the same open work space they usually adapt their behavior to the situation.

In other embodiments, the ambient noise can be monitored by other means such as:
- A microphone classically embedded in each personal computer.
- An independent microphone located at each work place.

The warning can be notified by different means such as:
- A warning message on the computer display of a user.
- Lights with dedicated colors corresponding to the levels of perturbation: from yellow to red for instance.
- A bip superimposed onto the audio signal reproduced by the earphone of the handset.

Further more, statistics can be computed and stored in the notification server and, when needed, a report can be provided for a given period of time.

In the example illustrated by Figure 4, the considered close neighbor work places are located in the rows and columns that are immediately next to the considered work place. In other examples, the considered close neighbor work places may be a little further, though not embracing the whole open work space. For instance:

| | | | | |
|---|---|---|---|---|
| WP_{j-2 j-2}, | WP_{i-2 j-1}, | WP_{i-2 j}, | WP_{i-2 j+1}, | WP_{i-2 j+2} |
| WP_{i-1 j-2}, | WP_{i-1 j-1}, | WP_{i-1 j}, | WP_{i-1 j+1}, | WP_{i-1 j+2} |
| WP_{i j-2}, | WP_{i j-1} | | WP_{i j+1}, | WP_{i j+2} |
| WP_{i+1 j-2}, | WP_{i+1 j-1}, | WP_{i+1 j}, | WP_{i+1 j+1}, | WP_{i+1 j+2} |
| WP_{i+2 j-2}, | WP_{i+2 j-1}, | WP_{i+2 j}, | WP_{i+2 j+1}, | WP_{i+2 j+2} |

## Claims

1. A server (NS) for providing a quieter environment in an open work space (OWS) comprising a plurality of work places WP₁₁, ..., WPᵢⱼ, ... WPₙₘ respectively used by a plurality of users; said server comprising a processor configured for:
- receiving (31; 41), at the instant t, digital audio signals ANᵢⱼ(t), for i = 1 to n and j = 1 to m, corresponding to the ambient noises respectively captured by microphones at the work places WP₁₁, ..., WPₙₘ;
- computing (32; 42) average values Lᵢⱼ(t), for i = 1 to n and j = 1 to m, respectively representing the current noises at the work places WP₁₁, ..., WPₙₘ, at the instant t;
- computing (33; 43) a threshold value THᵢⱼ(t) that represents the current noise, at the instant t, in the neighbourhood of the work place WPᵢⱼ;
- comparing (34; 44) each digital audio signal ANᵢⱼ(t) with the threshold value THᵢⱼ(t) for i = 1 to n and j = 1 to m;
- then determining (35; 45) what are the digital audio signals ANᵢⱼ(t) that are respectively greater than the threshold values THᵢⱼ(t) for i = 1 to n and j = 1 to m, for determining at least one work place that corresponds to a digital audio signal ANᵢⱼ(t) that is greater than the threshold value THᵢⱼ(t); and then notifying a warning to the user of the so determined work place;
**characterized in that** said threshold is computed as a function of p values Lᵢⱼ(t) respectively representing the current noises at p work places that are neighbors of the work place WPᵢⱼ.

2. A server according to claim 1 wherein periodically computing a threshold value THᵢⱼ(t) that represents the current noisein the neighbourhood of the work place WPᵢⱼ as a function of the values Lᵢⱼ(t) respectively representing the current noises at the work places WP₁₁, ..., WPₙₘ, at the instant t, comprises the step of taking into account the values Lᵢⱼ(t) respectively representing the current noises at all the work places WP₁₁, ..., WPₙₘ of the open work space (OWS).

3. A server according to claim 1 wherein periodically computing a threshold value THᵢⱼ(t) that represents the current noise in the neighbourhood of the work place WPᵢⱼ as a function of the values Lᵢⱼ(t) respectively representing the current noises at the work places WP₁₁, ..., WPₙₘ, at the instant t, takes into account the values Lᵢⱼ(t) respectively representing the current noises at work places that are close neighbours of the workplace WPᵢⱼ.

## Patentansprüche

1. Server (NS) zum Erlangen einer ruhigeren Umgebung in einem offenen Arbeitsbereich (Open Work Space, OWS), welcher eine Vielzahl von Arbeitsplätzen (Work Places, WP) WP₁₁, ..., WPᵢⱼ,... WPₙₘ umfasst, die jeweils von einer Vielzahl von Benutzern benutzt werden, wobei besagter Server einen Prozessor umfasst, der für Folgendes konfiguriert ist:
- den zum Zeitpunkt t erfolgenden Empfang (31; 41) digitaler Audiosignale ANᵢⱼ(t), für i = 1 zu n und j = 1 zu m, die den Umgebungsgeräuschen entsprechen, die jeweils von Mikrofonen an den Arbeitsplätzen WP₁₁, ..., WPₙₘ aufgezeichnet werden;
- das Berechnen (32; 42) von Durchschnittswerten Lᵢⱼ(t), für i = 1 zu n und j = 1 zu m, die jeweils für den aktuellen Geräuschpegel an den Arbeitsplätzen WP₁₁, ..., WPₙₘ zum Zeitpunkt t stehen;
- das Berechnen (33; 43) eines Grenzwerts (Threshold, TH) THᵢⱼ(t) der für den aktuellen Geräuschpegel zum Zeitpunkt t in der Umgebung des Arbeitsplatzes WPᵢⱼ steht;
- das Vergleichen (34; 44) eines jeden digitalen Audiosignals ANᵢⱼ(t) mit dem Grenzwert THᵢⱼ (t) für i = 1 zu n und j = 1 zu m;
- nachfolgend das Bestimmen (35; 45), welches die stärksten digitalen Audiosignale ANᵢⱼ(t) sind, die jeweils über den Grenzwerten THᵢⱼ(t) für i = 1 zu n und j = 1 zu m liegen, um mindestens einen Arbeitsplatz zu bestimmen, der einem digitalen Audiosignal ANᵢⱼ(t) entspricht, das höher ist als der Grenzwert THᵢⱼ(t); und darauffolgend das Ausgeben einer Warnung an den Benutzer des so bestimmten Arbeitsplatzes;
**dadurch gekennzeichnet, dass** der besagte Grenzwert in Funktion von p Werten Lᵢⱼ(t) berechnet wird, die jeweils die aktuellen Geräuschpegel an p Arbeitsplätzen repräsentieren, die dem Arbeitsplatz WPᵢⱼ benachbart sind.

2. Ein Server nach Anspruch 1, wobei das regelmäßige Berechnen eines Grenzwerts THᵢⱼ(t), welcher den aktuellen Geräuschpegel in der Nachbarschaft des Arbeitsplatzes WPᵢⱼ als Funktion der Werte Lᵢⱼ(t) berechnet, die jeweils die aktuellen Geräuschpegel an den Arbeitsplätzen WP₁₁, ..., WPₙₘ zum Zeitpunkt t repräsentieren, den Schritt umfasst, die Werte Lᵢⱼ(t) zu berücksichtigen, die jeweils die aktuellen Geräuschpegel an allen Arbeitsplätzen WP₁₁, ..., WPₙₘ des offenen Arbeitsbereichs (OWS) repräsentieren.

3. Ein Server nach Anspruch 1, wobei das regelmäßige Berechnen eines Grenzwerts THᵢⱼ(t), welcher den aktuellen Geräuschpegel in der Nachbarschaft des Arbeitsplatzes WPᵢⱼ als Funktion der Werte Lᵢⱼ(t) repräsentiert, die jeweils die aktuellen Geräuschpegel an den Arbeitsplätzen WP₁₁, ..., WPₙₘ zum Zeitpunkt t repräsentieren, die Werte Lᵢⱼ(t) berücksichtigt, die jeweils die aktuellen Geräuschpegel an Arbeitsplätzen repräsentieren, die in der Nähe des Arbeitsplatzes WPᵢⱼ. sind.

## Revendications

1. Serveur (NS) pour fournir un environnement plus silencieux dans un espace de travail ouvert (OWS) comprenant une pluralité de postes de travail WP₁₁, ..., WPᵢⱼ, ... WPₙₘ utilisés respectivement par une pluralité d'utilisateurs ; ledit serveur comprenant un processeur configuré pour :
- recevoir (31 ; 41), à l'instant t, des signaux audio numériques ANᵢⱼ(t), pour i = 1 à n et j = 1 à m, correspondant aux bruits ambiants captés respectivement par des microphones au niveau des postes de travail WP₁₁, ..., WPₙₘ ;
- calculer (32 ; 42) des valeurs moyennes Lᵢⱼ(t), pour i = 1 à n et j = 1 à m, représentant respectivement les bruits actuels au niveau des postes de travail WP₁₁, ..., WPₙₘ, à l'instant t ;
- calculer (33 ; 43) une valeur de seuil THᵢⱼ(t) qui représente le bruit actuel, à l'instant t, dans le voisinage du poste de travail WPᵢⱼ ;
- comparer (34 ; 44), chaque signal audio numérique ANᵢⱼ(T) avec la valeur de seuil THᵢⱼ(t) pour i = 1 à n et j = 1 à m;
- déterminer ensuite (35 ; 45) quels sont les signaux audio numériques ANᵢⱼ(t) qui sont respectivement supérieurs aux valeurs de seuil THᵢⱼ(t) pour i = 1 à n et j = 1 à m, pour déterminer au moins un poste de travail qui correspond à un signal audio numérique ANᵢⱼ(T) qui est supérieur à la valeur de seuil THᵢⱼ(t) ; et notifier ensuite un avertissement à l'utilisateur du poste de travail ainsi déterminé ;
**caractérisé en ce que** ledit seuil est calculé en fonction de p valeurs Lᵢⱼ(t) représentant respectivement les bruits actuels au niveau de p postes de travail qui sont voisins du poste de travail WPᵢⱼ.

2. Serveur selon la revendication 1, dans lequel le calcul périodique d'une valeur de seuil THᵢⱼ(t) qui représente le bruit actuel dans le voisinage du poste de travail WPᵢⱼ en fonction des valeurs Lᵢⱼ(t) représentant respectivement les bruits actuels au niveau des postes de travail WP₁₁, ..., WPₙₘ, à l'instant t, comprend l'étape de prise en compte des valeurs Lᵢⱼ(t) représentant respectivement les bruits actuels au niveau de tous les postes de travail WP₁₁, ..., WPₙₘ de l'espace de travail ouvert (OWS).

3. Serveur selon la revendication 1, dans lequel le calcul périodique d'une valeur de seuil THᵢⱼ(t) qui représente le bruit actuel dans le voisinage du poste de travail WPᵢⱼ en fonction des valeurs Lᵢⱼ(t) représentant respectivement les bruits actuels au niveau des postes de travail WP₁₁, ..., WPₙₘ, à l'instant t, prend en compte les valeurs Lᵢⱼ(t) représentant respectivement les bruits actuels au niveau des postes de travail qui sont des voisins proches du poste de travail WPᵢⱼ.
